# EUROPEAN PATENT SPECIFICATION

(11) **EP 4 181 296 B1**
(45) Date of publication and mention of the grant of the patent: **01.10.2025**
(21) Application number: 21919938.7
(22) Date of filing: 27.12.2021
(51) Int. Cl.: H01M 50/262, H01M 50/211, H01M 50/249, H01M 50/204, H01M 50/209, H01M 50/224, H01M 50/264

(54) **BATTERY PACK AND DEVICE INCLUDING THE SAME**
BATTERIEPACK UND VORRICHTUNG DAMIT
BLOC-BATTERIE ET DISPOSITIF LE COMPRENANT

(30) Priority: 13.01.2021 KR 20210004508
(43) Date of publication of application: 17.05.2023
(73) Proprietor: LG Energy Solution, Ltd., Seoul 07335 (KR)
(72) Inventor: OH, Jaehun, Daejeon 34122 (KR); SHIN, Jinhwan, Daejeon 34122 (KR)
(74) Representative: Plasseraud IP
(86) International application number: PCT/KR2021/019914
(87) International publication number: WO 2022/154315

(56) References cited:
- EP-A1- 3 751 635
- WO-A1-2018/123337
- JP-A- 2020 111 101
- KR-A- 20150 128 604
- KR-A- 20190 061 390
- KR-U- 20110 012 000

## Description

The present invention relates to a battery pack and a device including the same, and more particularly, to a battery pack having improved structural safety and a device including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate, each being coated with the positive electrode active material and the negative electrode active material, are disposed with a separator being interposed between them, and a battery case which seals and houses the electrode assembly together with an electrolyte solution.

Generally, the lithium secondary battery may be classified based on the shape of the exterior material into a can type secondary battery in which the electrode assembly is built into a metal can, and a pouch-type secondary battery in which the electrode assembly is built into a pouch of an aluminum laminate sheet.

In the case of a secondary battery used for small-sized devices, two to three battery cells are disposed, but in the case of a secondary battery used for a middle or large-sized device such as an automobile, a battery module in which a large number of battery cells are electrically connected is used. In such a battery module, a large number of battery cells are connected to each other in series or parallel to form a cell assembly, thereby improving capacity and output. In addition, one or more battery modules can be mounted together with various control and protection systems such as a battery management system (BMS) and a cooling system to form a battery pack.

As the inside of the battery pack is integrated and various internal components are located therein, a spatial restriction occurs inside the battery pack, and it may be difficult to secure the rigidity of a structure for fastening the battery module housed in the battery pack. There is a need for a technical solution that can improve the structural safety of the battery pack in the restricted space of the battery pack.

EP 3 751 635 relates to a battery package including fixing member, a device including the same and manufacturing method of battery package.

### [DETAILED DESCRIPTION OF THE INVENTION]

### [Technical Problem]

It is an object of the present invention to provide a battery pack equipped with a battery module fastening structure that can be used within the restricted space of the battery pack and at the same time, has the durability.

However, the problem to be solved by embodiments of the present invention is not limited to the above-described problems, and can be variously expanded within the scope of the technical idea included in the present invention.

### [Technical Solution]

According to an embodiment of the present invention, there is provided a battery pack comprising: a battery module including a plurality of battery cells; a pack frame for housing the battery module; and a hold down bracket for fixing the battery module to the pack frame, wherein the hold down bracket comprises a first fastening part fastened to the battery module; a second fastening part fastened to the pack frame; a connection part for connecting the first fastening part and the second fastening part; and a reinforcing member coupled to the connection part, and wherein the connection part and the reinforcing member coupled with each other have a closed structure.

The connection part may have a structure that is curved downward and has an opened upper part, and the reinforcing member may be coupled to the connection part to form a double plate structure having a closed shape.

The reinforcing member may have a structure which is curved upward and has an opened lower part.

The side surface part of the connection part and the side surface part of the reinforcing member may be weld-joined while overlapping each other.

The battery module may include an upper battery module and a lower battery module, and the upper battery module may be stacked on the lower battery module.

The first fastening part of the hold down bracket may be fastened to the upper battery module.

The connection part may include a portion which is bent in an upward direction.

A width of the first fastening part may be wider than a width of the second fastening part.

The connection part may become narrow in width as it goes from the first fastening part toward the second fastening part.

### [Advantageous Effects]

According to embodiments of the present invention, the battery module fastening structure is made into a closed structure, so that the rigidity of the battery module fastening structure can be ensured even within a restricted space inside the battery pack.

The effects of the present invention are not limited to the effects mentioned above and additional other effects not described above will be clearly understood from the description of the appended claims by those skilled in the art.

### [BRIEF DESCRIPTION OF THE DRAWINGS]

Fig. 1 is a partial perspective view showing a battery pack according to an embodiment of the present invention;
Fig. 2 is a perspective view showing a battery module included in the battery pack of Fig. 1;
Fig. 3 is a perspective view showing a battery cell included in the battery module of Fig. 2;
Fig. 4 is a perspective view showing a hold down bracket included in the battery pack of Fig. 1;
Fig. 5 is an exploded perspective view of the hold down bracket of Fig. 4;
Fig. 6 is a cross-sectional view showing a cross-section along the cutting line A-A of Fig. 4;
Fig. 7 is a cross-sectional view showing a cross-section of the battery pack of Fig. 1 on the xz plane;
Fig. 8 is a perspective view showing a hold down bracket according to a comparative example of the present invention; and
Fig. 9 is a cross-sectional view showing a cross-section of the battery pack equipped with the hold down bracket of Fig. 8 on the xz plane.

### [DETAILED DESCRIPTION OF THE EMBODIMENTS]

Hereinafter, various embodiments of the present invention will be described in detail with reference to the accompanying drawings so that those skilled in the art can easily carry out them.

A description of parts not related to the description will be omitted herein for clarity, and like reference numerals designate like elements throughout the description.

Further, in the drawings, the size and thickness of each element are arbitrarily illustrated for convenience of description, and the present invention is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

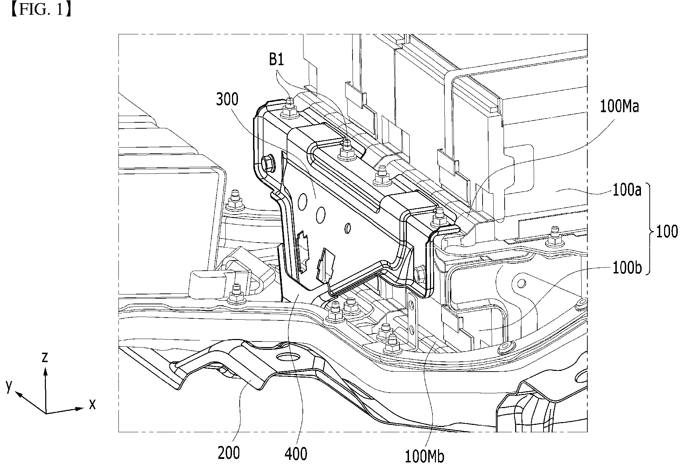

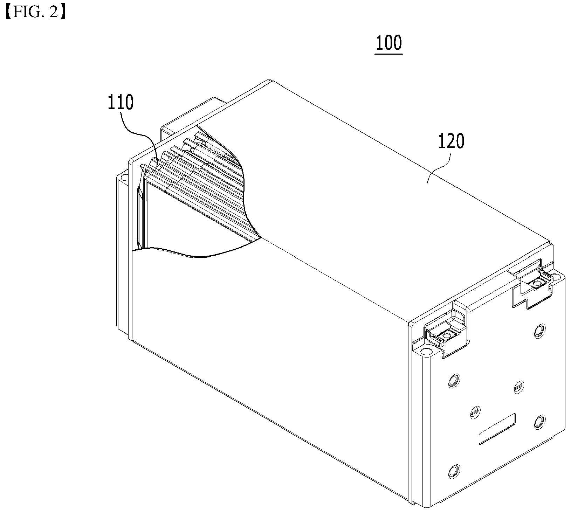

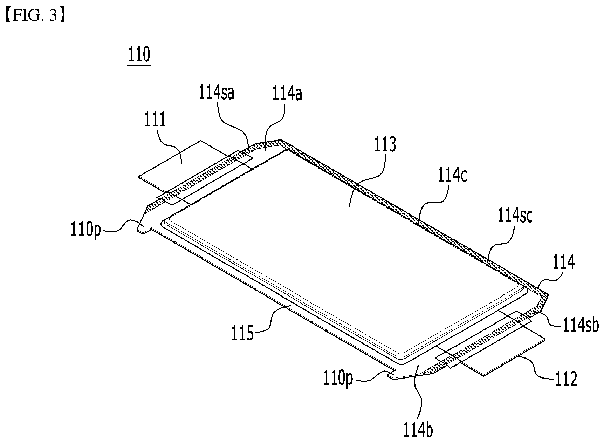

Fig. 1 is a partial perspective view showing a battery pack according to an embodiment of the present invention. Fig. 2 is a perspective view showing a battery module included in the battery pack of Fig. 1. Fig. 3 is a perspective view showing a battery cell included in the battery module of Fig. 2.

Referring to Figs. 1 to 3, the battery pack according to an embodiment of the present invention includes a battery module 100 including a plurality of battery cells 110; a pack frame 200 for housing the battery module 100; and a hold down bracket 300 for fixing the battery module 100 to the pack frame 200.

The battery module 100 can be formed by housing a plurality of battery cells 110 inside the module frame 120. The battery cell 110 is preferably a pouch-type battery cell. For example, the battery cell 110 according to the present embodiment has a structure in which two electrode leads 111 and 112 face each other and protrude from one end 114a and the other end 114b of a cell body 113, respectively. More specifically, the electrode leads 111 and 112 are connected to an electrode assembly (not shown) and protrude from the electrode assembly (not shown) to the outside of the battery cell 110.

Meanwhile, the battery cell 110 can be manufactured by joining both ends 114a and 114b of the cell case 114 and one side part 114c connecting them in a state in which an electrode assembly (not shown) is housed in a cell case 114. In other words, the battery cells 110 according to the present embodiment have a total of three sealing parts 114sa, 114sb and 114sc, the sealing parts 114sa, 114sb and 114sc have a structure that is sealed by a method such as heat welding, and the remaining other one side part can be formed of a bending part 115. The cell case 114 may be formed of a laminated sheet including a resin layer and a metal layer.

In addition, the bending part 115 may extend long along one edge of the battery cell 110, and a protrusion part 110p of the battery cell 110 called a bat-ear may be formed at an end part of the bending part 115. The battery cell 110 may be configured in plural numbers, and the plurality of battery cells 110 can be stacked so as to be electrically connected to each other.

Meanwhile, in the battery pack according to the present embodiment, the battery module 100 is composed in plural numbers and can be housed in the pack frame 200. Also, when the plurality of battery modules 100 are housed in the pack frame 200, a two-layer structure may be formed. In other words, the battery module 100 may include an upper battery module 100a and a lower battery module 100b, wherein the upper battery module 100a may be stacked on the lower battery module 100b. The lower battery module 100b may be stacked on the pack frame 200.

Meanwhile, the battery module 100 may include mounting parts 100Ma and 100Mb. Specifically, the upper battery module 100a may include a mounting part 100Ma, and the lower battery module 100b may also include a mounting part 100Mb. A bolt or the like can be inserted into the mounting part 100Mb of the lower battery module 100b and fastened to the pack frame 200. Because the upper battery module 100a is located on the lower battery module 100b, it can be fastened by the hold down bracket 300, which is a separate fastening member, instead of being directly fastened to the pack frame 200.

Next, the hold down bracket 300 according to the present embodiment will be described in detail.

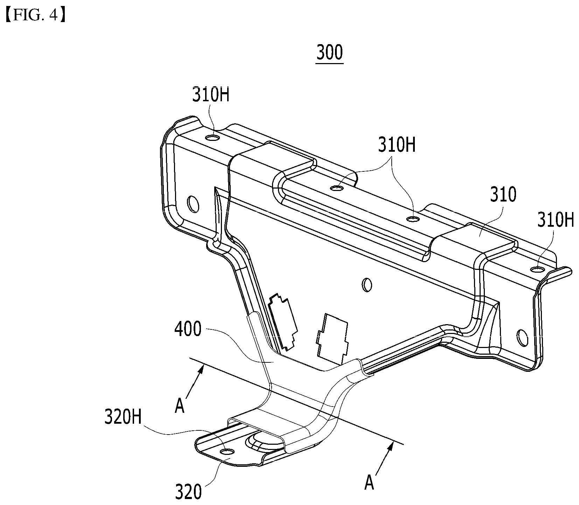

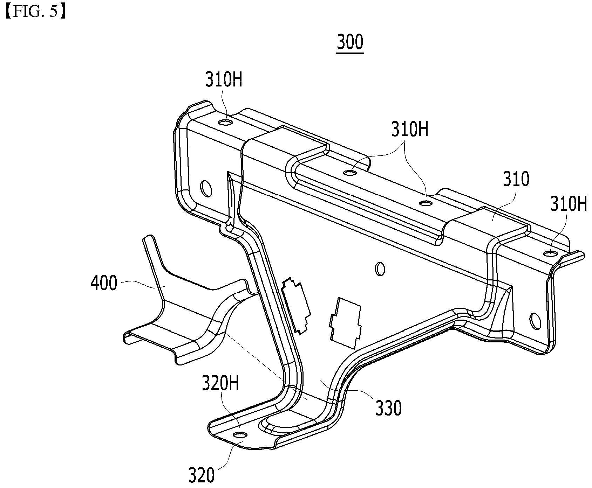

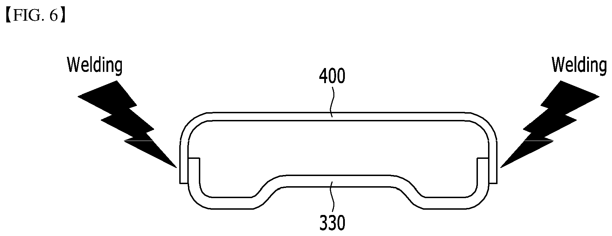

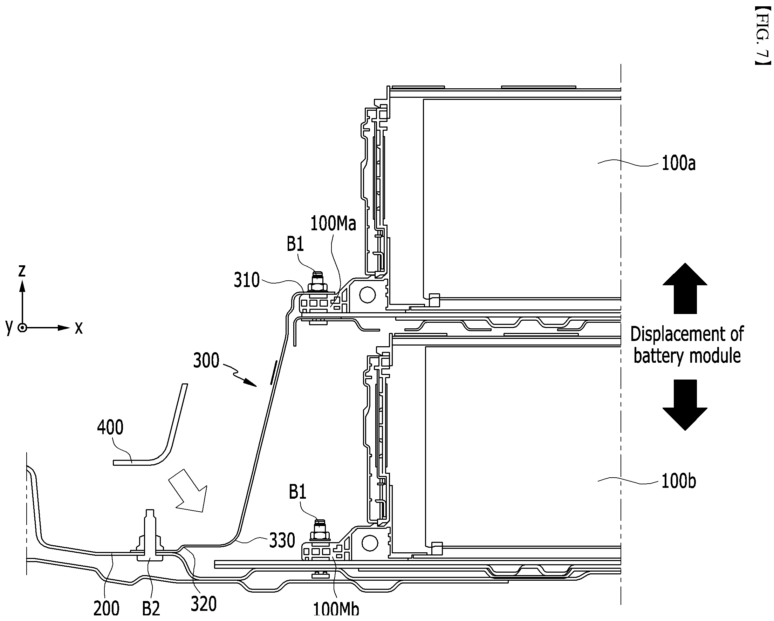

Fig. 4 is a perspective view showing a hold down bracket included in the battery pack of Fig. 1. Fig. 5 is an exploded perspective view of the hold down bracket of Fig. 4. Fig. 6 is a cross-sectional view showing a cross-section taken along the cutting line A-A of Fig. 4. Fig. 7 is a cross-sectional view showing the battery pack of Fig. 1 taken along the xz plane.

Referring to Figs.1 and 4 to 7, the hold down bracket 300 according to the present embodiment includes a first fastening part 310 fastened to the battery module 100; a second fastening part 320 fastened to the pack frame 200; a connection part 330 for connecting the first fastening part 310 and the second fastening part 320; and a reinforcing member 400 coupled to the connection part 330. At this time, the connection part 330 and the reinforcing member 400 coupled with each other have a closed structure.

At least one first through hole 310H into which the bolt B1 can be inserted may be formed in the first fastening part 310. The first fastening part 310 can be fastened to the battery module 100 in such a manner that the bolt B1 passing through the first through hole 310H is coupled to the battery module 100. At this time, the first fastening part 310 can be fastened to the upper battery module 100a of the battery modules 100, and the bolt B1 passing through the first through hole 310H can be coupled to the mounting part 100Ma of the upper battery module 100. That is, the upper battery module 100a located at the upper part of the battery modules 100 forming the two-layer structure can be fastened to the pack frame 200 by the hold down bracket 300.

At least one second through hole 320H into which a bolt can be inserted may be formed in the second fastening part 320. The second fastening part 320 may be fastened to the pack frame 200 in such a manner that the bolt B2 passing through the second through hole 320H is coupled to the pack frame 200.

Meanwhile, as shown in Figs. 4 and 5, the connection part 330 according to the present embodiment may have a structure that is curved downward and has an opened upper part, or may be composed of one layer. That is, since the connection part is composed of one layer, it is in a shape in which the upper part and the lower part are opened. Meanwhile, the reinforcing member 400 may have a structure that is curved upward and has an opened lower part. The reinforcing member 400 may be coupled on the connection part 330 to form a closed double plate structure.

In the coupling of the connection part 330 and the reinforcing member 400, the side surface part of the connection part 330 and the side surface part of the reinforcing member 400 may be weld-joined while overlapping each other, as shown in Fig. 6.

Meanwhile, as described above, the first fastening part 310 and the second fastening part 320 of the hold down bracket 300 may be fastened to the upper battery module 100a and the pack frame 200, respectively, whereby the connection part 330 for connecting the first fastening part 310 and the second fastening part 320 may include a portion which is bent in an upward direction. The reinforcing member 400 may be coupled to the portion which is bent in an upward direction.

Meanwhile, the width of the first fastening part 310 may be wider than the width of the second fastening part 320. In one example, as shown in Fig. 4, the first fastening portion 310 has a relatively wide width as much as four first through-holes 310H can be formed, while the second fastening part 320 has a relatively narrow width as much as only one second through hole 320H is formed. The width of the fastening part or the number of through-holes is not particularly limited, and may vary depending on the design, but as described above, the width of the first fastening part 310 may be wider than the width of the second fastening part 320. Thereby, the connection part 330 according to the present embodiment may have a shape in which the width becomes narrower as it goes from the first fastening part 310 toward the second fastening part 320.

In order to meet the needs such as miniaturization of the battery pack and improvement of energy density, a number of parts must be arranged collectively inside the battery pack, and the utilization of space inside the battery pack has become a factor directly linked to the performance of the battery pack. Under this background, the utilization of the internal space can be improved by reducing the width of the second fastening part 320 fixed to the pack frame 200. On the other hand, the first fastening part 310 directly fastened to the battery module 100 has preferably a width corresponding to the width of the battery module 100 to some extent, in order to stably mount the battery module 100. Therefore, the hold down bracket 300 according to the present embodiment may have a shape in which the width of the first fastening part 310 is wider than the width of the second fastening part 320 in order to balance the demand for space utilization inside the battery pack and the demand for stable fixing of the battery module 100.

Next, the functions of the reinforcing member 400 according to the present embodiment will be described in detail in comparison with the hold down bracket 30 according to the comparative example of the present invention.

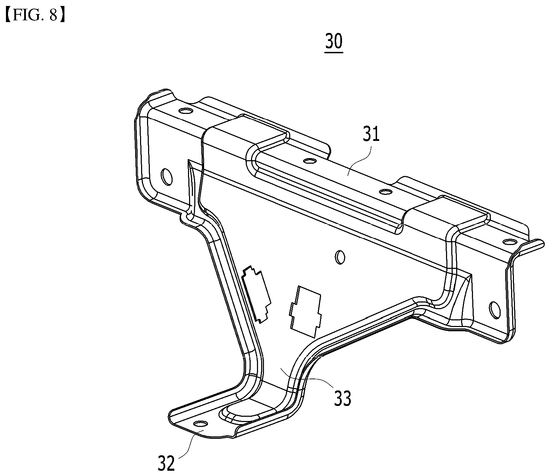

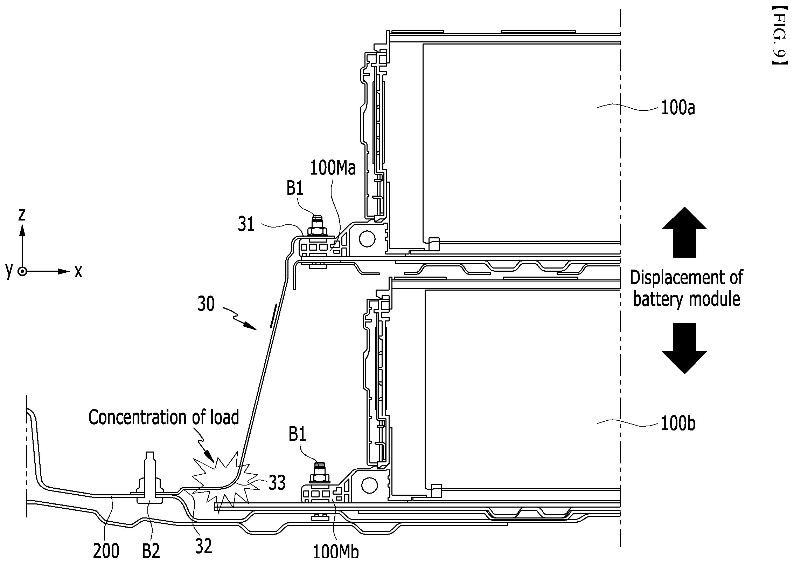

Fig. 8 is a perspective view showing a hold down bracket according to a comparative example of the present invention. Fig. 9 is a cross-sectional view showing the battery pack equipped with the hold down bracket of Fig. 8 cut along the xz plane.

First, referring to Fig. 8, the hold down bracket 30 according to the comparative example of the present invention includes a first fastening part 31, a second fastening part 32, and a connection part 33. It has a structure similar to that of the hold down bracket 300 according to the present embodiment, except that the reinforcing member is not coupled to the connection part 33.

Referring to Figs. 8 and 9 together, the battery module 100 can be fixed to the pack frame 200 by using the hold down bracket 300 according to this comparative example. In particular, the battery module 100 may include an upper battery module 100a and a lower battery module 100b having a two-layer structure, and the first fastening part 31 of the hold down bracket 30 can be coupled to the mounting part 100Ma of the upper battery module 100a by a bolt B1. The second fastening part 32 of the hold down bracket 30 can be coupled to the pack frame 200 by a bolt B2.

The battery module 100 disposed inside the battery pack may show the displacement in vertical direction due to external impact or vibration, etc. According to this displacement, the load may be concentrated on the connection part 33 that connects the first fastening part 31 and the second fastening part 32. At this time, since the connection part 33 that is curved downward and has an opened upper part is particularly weak in rigidity, the connection part 33 may be damaged due to the concentration of load.

On the other hand, referring to Figs. 1 and 7, the hold down bracket 300 according to the present embodiment includes a reinforcing member 400 coupled to the connection part 330. As described above, the load due to the displacement of the battery module 100 may be concentrated on the connection part 330 which is curved downward, has an opened upper part and thus is weak in rigidity. A method of simply increasing the thickness of the connection part may be considered in order to supplement the rigidity, but there is a limit to only increasing the thickness. Therefore, the reinforcing member 400 which is curved upward and has an opened lower part can be coupled with the connection part 330 to form a closed double plate structure, thereby securing the rigidity of the connection part 330.

In particular, the connection part 330 according to the present embodiment includes a portion which is bent in an upward direction, as described above, and has a shape in which the width becomes narrower as it goes from the first fastening part 310 toward the second fastening part 320. This may be a factor that impairs the rigidity of the connection part 330, but in the present embodiment, the rigidity of the connection part 330 is supplemented by coupling the reinforcing member 400. At this time, the reinforcing member 400 may include a portion which is bent in an upward direction, as shown in Fig. 5, and may have a shape in which the width becomes narrow as it goes from the first fastening part 310 toward the second fastening part 320. That is, the shape of the reinforcing member 400 may be configured so as to correspond to the shape of the connection part 330.

Meanwhile, the battery pack according to the present invention may include various control and protection systems such as BDU(battery disconnect unit), BMS (battery management system) and a cooling system, in addition to the battery module.

The battery pack according to the present invention can be applied to various devices. Specifically, these devices can be applied to vehicle means such as an electric bicycle, an electric vehicle, a hybrid vehicle, but the present invention is not limited thereto and can be applied to various devices that can use the secondary battery.

### [Description of Reference Numerals]

100: battery module
200: pack frame
300: hold down bracket
400: reinforcing member

## Claims

1. A battery pack comprising:
a battery module (100) including a plurality of battery cells (110);
a pack frame (200) for housing the battery module (100); and
a hold down bracket (300) for fixing the battery module (100) to the pack frame (200),
the hold down bracket (300) comprising a first fastening part (310) fastened to the battery module; a second fastening part (320) fastened to the pack frame (200); a connection part (330) for connecting the first fastening part (310) and the second fastening part (320); and a reinforcing member (400) coupled to the connection part (330),
the battery pack being **characterized in that** the connection part (330) and the reinforcing member (400) coupled with each other have a closed structure.

2. The battery pack of claim 1, wherein:
the connection part (330) has a structure that is curved downward and has an opened upper part, and
the reinforcing member (400) is coupled to the connection part (330) to form a double plate structure having a closed shape.

3. The battery pack of claim 1, wherein:
the reinforcing member (400) has a structure which is curved upward and has an opened lower part.

4. The battery pack of claim 1, wherein:
the side surface part of the connection part (330) and the side surface part of the reinforcing member (400) are weld-joined while overlapping each other.

5. The battery pack of claim 1, wherein:
the battery module (100) comprises an upper battery module (100a) and a lower battery module (100b), and
the upper battery module (100a) is stacked on the lower battery module (100b).

6. The battery pack of claim 5, wherein:
the first fastening part (310) of the hold down bracket (300) is fastened to the upper battery module (100a).

7. The battery pack of claim 6, wherein:
the connection part (300) comprises a portion which is bent in an upward direction.

8. The battery pack of claim 1, wherein:
a width of the first fastening part (310) is wider than a width of the second fastening part (320).

9. The battery pack of claim 8, wherein:
the connection part (300) becomes narrow in width as it goes from the first fastening part (310) toward the second fastening part (320).

10. A device comprising the battery pack of claim 1.

## Patentansprüche

1. Batteriepack umfassend:
ein Batteriemodul (100) umfassend eine Mehrzahl von Batteriezellen (110);
einen Packrahmen (200) zum Aufnehmen des Batteriemoduls (100); und
eine Niederhalteklammer (300) zum Fixieren des Batteriemoduls (100) an dem Packrahmen (200),
wobei die Niederhalteklammer (300) ein erstes Befestigungsteil (310), das an dem Batteriemodul befestigt ist; ein zweites Befestigungsteil (320), das an dem Packrahmen (200) befestigt ist; ein Verbindungsteil (330) zum Verbinden des ersten Befestigungsteils (310) und des zweiten Befestigungsteils (320); und ein Verstärkungselement (400), das mit dem Verbindungsteil (330) gekoppelt ist, umfasst,
wobei das Batteriepack **dadurch gekennzeichnet ist, dass**
das Verbindungsteil (330) und das Verstärkungselement (400), die miteinander gekoppelt sind, eine geschlossene Struktur aufweisen.

2. Batteriepack nach Anspruch 1, wobei:
das Verbindungsteil (330) eine Struktur aufweist, die nach unten gekrümmt ist und einen geöffneten oberen Teil aufweist, und
das Verstärkungselement (400) mit dem Verbindungsteil (330) gekoppelt ist, um eine Doppelplattenstruktur mit einer geschlossenen Form zu bilden.

3. Batteriepack nach Anspruch 1, wobei:
das Verstärkungselement (400) eine Struktur aufweist, die nach oben gekrümmt ist und einen geöffneten unteren Teil aufweist.

4. Batteriepack nach Anspruch 1, wobei:
das Seitenflächenteil des Verbindungsteils (330) und das Seitenflächenteil des Verstärkungselements (400) schweißverbunden sind, während sie sich überlappen.

5. Batteriepack nach Anspruch 1, wobei:
das Batteriemodul (100) ein oberes Batteriemodul (100a) und ein unteres Batteriemodul (100b) umfasst, und
das obere Batteriemodul (100a) auf das untere Batteriemodul (100b) gestapelt ist.

6. Batteriepack nach Anspruch 5, wobei:
das erste Befestigungsteil (310) der Niederhalteklammer (300) an dem oberen Batteriemodul (100a) befestigt ist.

7. Batteriepack nach Anspruch 6, wobei:
das Verbindungsteil (300) einen Abschnitt umfasst, der in eine Aufwärtsrichtung gebogen ist.

8. Batteriepack nach Anspruch 1, wobei:
eine Breite des ersten Befestigungsteils (310) breiter ist als eine Breite des zweiten Befestigungsteils (320).

9. Batteriepack nach Anspruch 8, wobei:
das Verbindungsteil (300) in der Breite schmal wird, während es von dem ersten Befestigungsteil (310) in Richtung des zweiten Befestigungsteils (320) geht.

10. Vorrichtung umfassend das Batteriepack nach Anspruch 1.

## Revendications

1. Pack-batterie comprenant :
un module de batterie (100) comportant une pluralité d'éléments de batterie (110) ;
un cadre de pack (200) pour loger le module de batterie (100) ; et
un étrier de maintien (300) pour fixer le module de batterie (100) au cadre de pack (200),
l'étrier de maintien (300) comprenant une première pièce de fixation (310) fixée au module de batterie ; une seconde pièce de fixation (320) fixée au cadre de pack (200) ;
une pièce de raccordement (330) pour raccorder la première pièce de fixation (310) et la seconde pièce de fixation (320) ; et un organe de renfort (400) couplé à la pièce de raccordement (330),
le pack-batterie étant **caractérisé en ce que** la pièce de raccordement (330) et l'organe de renfort (400) couplés l'un à l'autre présentent une structure fermée.

2. Pack-batterie selon la revendication 1, dans lequel :
la pièce de raccordement (330) présente une structure qui est incurvée vers le bas et une partie supérieure ouverte, et l'organe de renfort (400) est couplé à la pièce de raccordement (330) pour former une structure à double plaque ayant une forme fermée.

3. Pack-batterie selon la revendication 1, dans lequel :
l'organe de renfort (400) présente une structure qui est incurvée vers le haut et une partie inférieure ouverte.

4. Pack-batterie selon la revendication 1, dans lequel :
la partie de surface latérale de la pièce de raccordement (330) et la partie de surface latérale de l'organe de renfort (400) sont soudées l'une à l'autre en se chevauchant.

5. Pack-batterie selon la revendication 1, dans lequel :
le module de batterie (100) comprend un module de batterie supérieur (100a) et un module de batterie inférieur (100b), et
le module de batterie supérieur (100a) est empilé sur le module de batterie inférieur (100b).

6. Pack-batterie selon la revendication 5, dans lequel :
la première partie de fixation (310) de l'étrier de maintien (300) est fixée au module de batterie supérieur (100a).

7. Pack-batterie selon la revendication 6, dans lequel :
la pièce de raccordement (300) comprend une partie qui est courbée vers le haut.

8. Pack-batterie selon la revendication 1, dans lequel :
une largeur de la première pièce de fixation (310) est supérieure à une largeur de la seconde pièce de fixation (320).

9. Pack-batterie selon la revendication 8, dans lequel :
la pièce de raccordement (300) devient étroite en largeur lorsqu'elle va de la première pièce de fixation (310) vers la seconde pièce de fixation (320).

10. Dispositif comprenant le pack-batterie selon la revendication 1.
